# FASCICULE DE BREVET EUROPEEN

(11) **EP 1 921 324 B1**
(45) Date de publication et mention de la délivrance du brevet: **13.05.2009**
(21) Numéro de dépôt: 07119603.4
(22) Date de dépôt: 30.10.2007
(51) Int. Cl.: F04D 29/32, F04D 29/38, F04D 29/68, F01D 5/14

(54) **Aube en flèche de turbomachine**
Durchgebogene Laufradschaufel einer Strömungsmaschine
Turbomachine arrow blade

(30) Priorité: 08.11.2006 FR 0654775
(43) Date de publication de la demande: 14.05.2008
(73) Titulaire: SNECMA, 75015 Paris (FR)
(72) Inventeur: Bois, Béatrice, 77166 Evry Gregy sur Yerres (FR); Madec, Alain Paul, 77590 Chartrettes (FR); M'Bengue, Amadou Lamine, 77240 Vert Saint Denis (FR)
(74) Mandataire: Boura, Olivier

(56) Documents cités:
- EP-A- 1 106 836
- WO-A-96/00841
- US-A1- 2005 254 956
- US-E1- R E38 040

## Description

### Arrière-plan de l'invention

La présente invention se rapporte au domaine général des aubes mobiles de turbomachine telles les aubes de la soufflante d'une turbomachine.

Les aubes de la soufflante d'une turbomachine sont soumises à des vitesses de rotation qui peuvent engendrer des vitesses subsoniques à supersoniques pour l'écoulement gazeux traversant la soufflante. Bien que des vitesses d'écoulement élevées permettent notamment d'améliorer le débit du flux gazeux pour augmenter la poussée de la turbomachine, elles présentent toutefois l'inconvénient d'engendrer un bruit important. En particulier, le « choc supersonique » correspondant au passage de vitesses supersoniques à des vitesses subsoniques pour le flux gazeux contribue pour une part importante à ce bruit. D'autres phénomènes d'interaction mettant en cause la turbulence de l'écoulement gazeux à proximité de la soufflante (bruit à large bande) sont également des sources de bruit.

Les motoristes cherchent donc à élaborer des aubes de soufflante qui permettent d'augmenter la poussée tout en minimisant le bruit engendré par l'écoulement gazeux. De plus, lors de l'élaboration de ces aubes, plusieurs autres paramètres doivent être pris en compte comme l'aérodynamique et la mécanique de ces aubes. En effet, les aubes doivent être dessinées de façon à optimiser le débit et la compression du flux gazeux les traversant tout en leur garantissant une bonne tenue mécanique. En particulier, aux vitesses de rotation élevées, les contraintes mécaniques subies par les aubes sont des plus sévères en raison du niveau élevé des vibrations et de la force centrifuge qui s'appliquent aux aubes.

De nombreuses géométries d'aubes de soufflante ont été proposées. Elles se caractérisent principalement par leurs lois d'empilages de sections d'aube, leur courbure générale et la présence éventuelle de flèches afin d'améliorer les performances aérodynamiques et de diminuer le bruit engendré par la soufflante. Cependant, aucune de ces aubes ne permet d'obtenir un fonctionnement aérodynamique efficace dans toutes les conditions d'utilisation de la turbomachine, notamment à haut régime (par exemple pendant le décollage et la fin de montée de l'avion) et à régime partiel (par exemple pendant la phase d'approche de l'avion), tout en respectant les normes de bruit qui sont de plus en plus contraignantes.

US 2005/0254956 décrit une aube selon le préamble de la revendication 1.

### Objet et résumé de l'invention

La présente invention a donc pour but principal de pallier de tels inconvénients en proposant une nouvelle géométrie d'aube de turbomachine qui permette de garantir un fonctionnement aérodynamique optimal dans toutes les conditions de fonctionnement de la turbomachine tout en minimisant le bruit engendré.

Ce but est atteint grâce à une aube comportant une pluralité de sections d'aube empilées selon un axe radial, chaque section d'aube s'étendant selon un axe longitudinal entre un bord d'attaque et un bord de fuite et selon un axe tangentiel entre une face intrados et une face extrados, l'empilement des sections d'aube étant divisé selon l'axe radial en un empilement inférieur, un empilement intermédiaire et un empilement supérieur, l'empilement inférieur s'étendant depuis un pied de l'aube jusqu'à une limite inférieure de l'empilement intermédiaire, l'empilement intermédiaire s'étendant depuis la limite inférieure jusqu'à une limite supérieure, et l'empilement supérieur s'étendant depuis la limite supérieure de l'empilement intermédiaire jusqu'à une tête de l'aube, et dans laquelle, conformément à l'invention :
la projection d'une ligne reliant les bords d'attaque des sections d'aube de l'empilement inférieur dans un plan méridien formé par l'axe longitudinal et l'axe radial présente une première inclinaison longitudinale vers le bord d'attaque qui est comprise entre 10° et 25° par rapport audit axe radial ;
la projection d'une ligne reliant les bords d'attaque des sections d'aube de l'empilement intermédiaire dans le plan méridien présente une deuxième inclinaison longitudinale vers le bord de fuite qui est comprise entre 10° et 25° par rapport audit axe radial ;
la projection d'une ligne reliant les bords d'attaque des sections d'aube de l'empilement supérieur dans le plan méridien présente une troisième inclinaison longitudinale vers le bord de fuite qui est comprise entre 20° et 50° par rapport audit axe radial ; et
la limite inférieure de l'empilement intermédiaire des sections d'aube se situe entre 30% et 40% de la hauteur radiale totale de l'empilement des sections d'aube mesurée depuis le pied de l'aube.

La demanderesse a constaté que la présence d'un ventre (correspondant à la limite inférieure de l'empilement intermédiaire) à une hauteur comprise entre 30 et 40% de la hauteur totale de l'aube combinée aux inclinaisons de la ligne de bord d'attaque définies ci-dessus permet d'améliorer considérablement les performances aérodynamiques de la turbomachine, notamment à haut régime. A débit spécifique élevé, ceci se traduit par une forte hausse du rendement de la soufflante de la turbomachine équipée de telles aubes. Les caractéristiques acoustiques de l'aube s'en trouvent également améliorées. En outre, l'aube selon l'invention satisfait aux critères d'équilibrage mécanique et de fabricabilité en matériau composite.

Selon une caractéristique avantageuse, l'empilement inférieur possède en outre une ligne reliant les centres de gravité de ses sections d'aube dont la projection dans un plan tangentiel formé par l'axe tangentiel et l'axe radial présente une première inclinaison tangentielle comprise entre -10° et 10° par rapport à l'axe radial, l'empilement intermédiaire possède en outre une ligne reliant les centres de gravité de ses sections d'aube dont la projection dans le plan tangentiel présente une deuxième inclinaison tangentielle comprise entre -20° et 0° par rapport à l'axe radial, et l'empilement supérieur possède en outre une ligne reliant les centres de gravité de ses sections d'aube dont la projection dans le plan tangentiel présente une troisième inclinaison tangentielle comprise entre -40° et -20° par rapport à l'axe radial.

De préférence, la projection de la ligne reliant les bords d'attaque de l'empilement supérieur présente en outre dans le plan méridien au niveau de sections de tête une quatrième inclinaison longitudinale vers le bord d'attaque.

Les empilements intermédiaire et supérieur peuvent s'étendre sur des hauteurs radiales sensiblement identiques.

L'invention a également pour objet une soufflante et une turbomachine ayant une pluralité d'aubes telles que définies précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe longitudinale et partielle d'une soufflante de turbomachine équipée d'aubes selon l'invention ;
- les figures 2A et 2B sont des vues d'une aube selon l'invention respectivement dans un plan méridien et un plan tangentiel ;
- la figure 3 est une vue dans un plan méridien d'une aube selon une variante de réalisation de l'invention ; et
- la figure 4 est une courbe montrant le gain de rendement obtenu par une aube selon l'invention par rapport à celui obtenu par une aube de l'art antérieur.

### Description détaillée de modes de réalisation

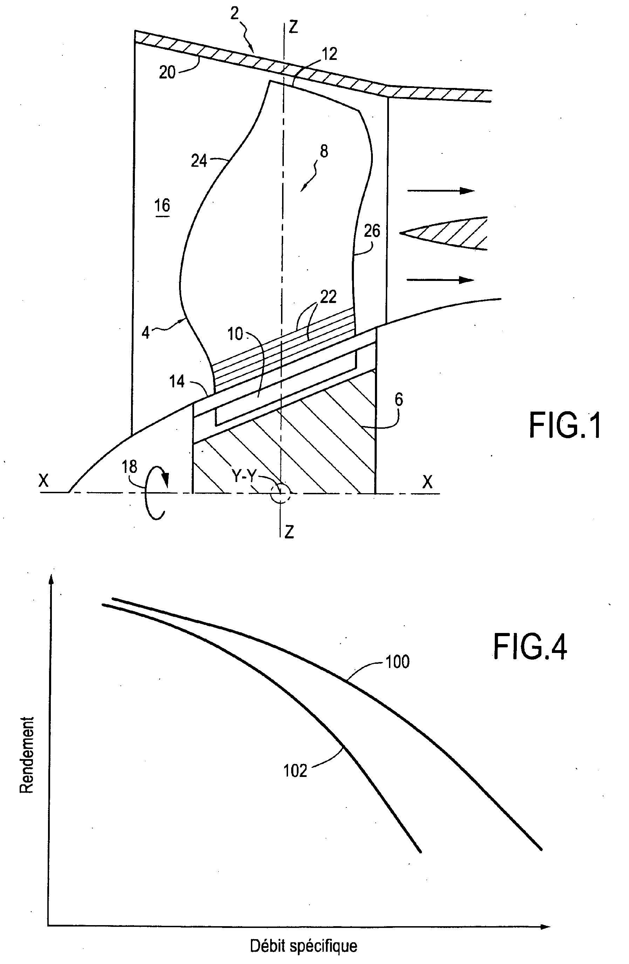

La figure 1 représente de façon schématique et partielle la soufflante 2 d'une turbomachine aéronautique. Celle-ci se compose d'une pluralité d'aubes 4 régulièrement espacées autour d'un disque 6 (ou moyeu) d'un rotor centré sur un axe longitudinal X-X de la soufflante.

De façon connue en soi, chaque aube 4 comporte notamment une pale 8, un pied 10 et une tête 12. Le pied 10 de l'aube est monté sur le disque 6 du rotor et est raccordé à la pale 8 par l'intermédiaire d'une plate-forme 14 délimitant à l'intérieur la veine 16 d'écoulement d'un flux gazeux traversant la soufflante. Le disque 6 du rotor est animé d'un mouvement de rotation autour de l'axe longitudinal X-X dans le sens indiqué par la flèche 18. Quant à la tête 12 de l'aube, elle est située en regard de la face interne 20 d'un carter annulaire fixe de la soufflante, cette face 20 délimitant la veine 16 à l'extérieur.

La pale 8 est composée d'une pluralité de sections d'aube 22 qui sont empilées selon un axe radial Z-Z perpendiculaire à l'axe X-X. Les sections d'aube 22 sont situées à des distances radiales croissantes de l'axe longitudinal X-X. L'empilement qui en résulte forme une surface aérodynamique qui s'étend selon l'axe longitudinal X-X entre un bord d'attaque 24 et un bord de fuite 26 et selon un axe tangentiel Y-Y de la soufflante entre une face intrados et une face extrados (ces faces ne sont pas représentées sur les figures).

Il est à noter que l'axe longitudinal X-X, l'axe tangentiel Y-Y et l'axe radial Z-Z de la soufflante ainsi définis forment un trièdre orthonormé direct.

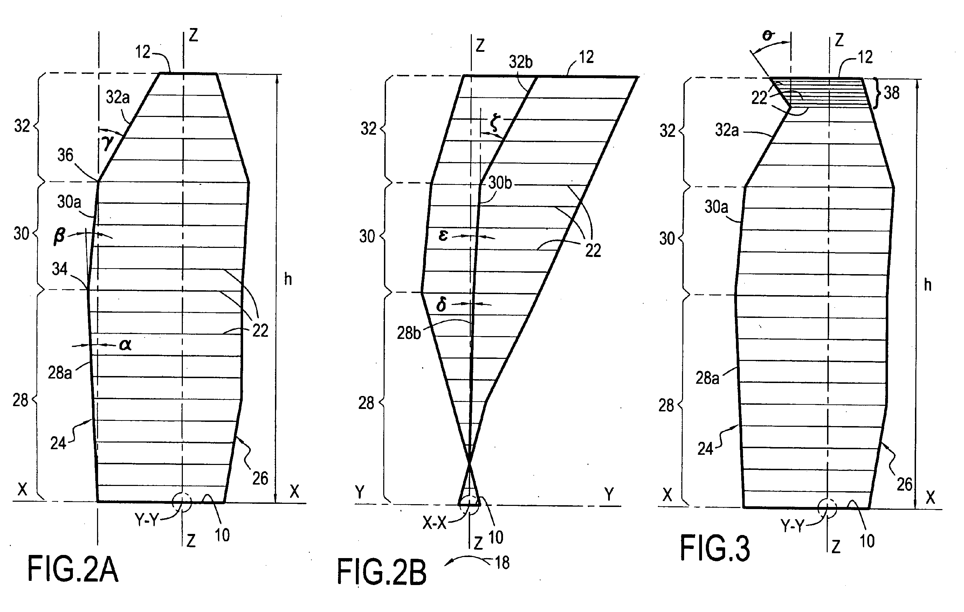

Comme illustré sur les figures 2A et 2B, l'empilement des sections d'aube 22 est divisé selon l'axe radial Z-Z en un empilement inférieur 28, un empilement intermédiaire 30 et un empilement supérieur 32.

En partant du pied 10 de l'aube, l'empilement inférieur 28 s'étend selon l'axe radial Z-Z depuis le pied jusqu'à une limite inférieure 34 de l'empilement intermédiaire 30. La ligne 28a reliant les bords d'attaque 24 des sections d'aube de l'empilement inférieur 28 présente en projection dans un plan méridien (formé par l'axe longitudinal X-X et l'axe radial Z-Z et représenté en figure 2A) une première inclinaison longitudinale α qui est dirigée vers le bord d'attaque 24 de l'aube (c'est-à-dire vers l'avant de la soufflante).

L'empilement intermédiaire 30 s'étend selon l'axe radial Z-Z entre la limite inférieure 34 et une limite supérieure 36. La ligne 30a reliant les bords d'attaque 24 des sections d'aube de cet empilement 30 présente en projection dans le plan méridien une deuxième inclinaison longitudinale β qui est dirigée vers le bord de fuite 26 de l'aube (c'est-à-dire vers l'arrière de la soufflante).

Quant à l'empilement supérieur 32, il s'étend selon l'axe radial Z-Z entre la limite supérieure 36 de l'empilement intermédiaire 30 et la tête 12 de l'aube. De préférence, les empilements intermédiaire 30 et supérieur 32 s'étendent sur des hauteurs radiales sensiblement identiques. Par ailleurs, la ligne 32a reliant les bords d'attaque 24 des sections d'aube de cet empilement 32 présente en projection dans le plan méridien une troisième inclinaison longitudinale γ qui est dirigée vers le bord de fuite 26 de l'aube.

De la sorte, la ligne 28a, 30a, 32a reliant les bords d'attaque de toutes les sections de l'aube présente en projection dans le plan méridien un profil ayant un point d'abscisse longitudinale minimum, appelé « ventre de l'aube », qui est situé au niveau de la limite inférieure 34 de l'empilement intermédiaire 30.

Selon l'invention, le ventre de l'aube (ou limite inférieure 34 de l'empilement intermédiaire 30 des sections d'aube) se situe entre 30% et 40% de la hauteur totale h de l'empilement des sections de l'aube, cette hauteur étant mesurée du pied 10 vers la tête 12 de l'aube selon l'axe radial Z-Z.

Par définition, on considère que la section de l'aube située à 0% de la hauteur h correspond au rayon d'intersection entre le bord d'attaque 24 et la veine intérieure d'écoulement du flux gazeux et la section située à 100% au point de la veine extérieure d'écoulement du flux pris à la même abscisse longitudinale que la section située à 0% de la hauteur h.

Toujours selon l'invention, la première inclinaison longitudinale α de la projection de la ligne 28a reliant les bords d'attaque de l'empilement inférieur 28 est comprise entre 10° et 25° par rapport à l'axe radial Z-Z, la deuxième inclinaison longitudinale β de la projection de la ligne 30a reliant les bords d'attaque de l'empilement intermédiaire 30 est comprise entre 10° et 25° par rapport à l'axe radial, et la troisième inclinaison longitudinale γ de la projection de la ligne 32a reliant les bords d'attaque de l'empilement supérieur 32 est comprise entre 20° et 50° par rapport à l'axe radial.

Selon une caractéristique avantageuse de l'invention illustrée par la figure 2B, l'empilement inférieur 28 possède en outre une ligne 28b reliant les centres de gravité de ses sections d'aube dont la projection dans un plan tangentiel (formé par l'axe tangentiel Y-Y et l'axe radial Z-Z) présente une première inclinaison tangentielle *δ* qui est comprise entre -10° et 10° par rapport à l'axe radial Z-Z.

De même, l'empilement intermédiaire 30 possède de préférence une ligne 30b reliant les centres de gravité de ses sections d'aube dont la projection dans le plan tangentiel présente une deuxième inclinaison tangentielle ε qui est comprise entre -20° et 0° par rapport à l'axe radial Z-Z.

Enfin, l'empilement supérieur 32 possède avantageusement une ligne 32b reliant les centres de gravité de ses sections d'aube dont la projection dans le plan tangentiel présente une troisième inclinaison tangentielle ζ qui est comprise entre -40° et -20° par rapport à l'axe radial Z-Z.

On notera que pour ces lignes 28b, 30b, 32b reliant les centres de gravité des sections d'aube, une inclinaison tangentielle négative correspond à une inclinaison dans le sens inverse de rotation de l'aube, tandis qu'une inclinaison tangentielle positive est réalisée dans le sens de rotation de l'aube.

L'aube de l'invention ainsi définie se caractérise par la combinaison d'un ventre relativement bas et prononcé avec une mise en flèche arrière fortement prononcée dans les directions longitudinale et tangentielle.

Selon une variante de réalisation de l'invention représentée à la figure 3, un léger basculement vers l'avant des sections de tête de l'aube peut être ajouté à une telle géométrie d'aube.

Un tel basculement se traduit par le fait que la projection de la ligne 32a reliant les bords d'attaque de l'empilement supérieur 32 présente dans le plan méridien au niveau de sections de tête 38 une quatrième inclinaison longitudinale θ vers le bord d'attaque 24.

Par sections de tête, on entend les sections d'aube 38 qui sont comprises entre 80% et 100% de la hauteur totale h d'empilement des sections d'aube 22.

Une telle inclinaison longitudinale θ correspond à un basculement vers l'avant des sections de tête 38 permettant notamment d'améliorer le comportement mécanique de l'aube. En effet, le basculement des sections de tête a pour avantage d'équilibrer l'aube en limitant les écarts entre les centres de gravité des sections d'aube sans pour autant affecter les performances aérodynamiques de l'aube.

A titre d'exemple, cette quatrième inclinaison longitudinale θ vers le bord d'attaque peut être comprise entre 5° et 20°.

La figure 4 illustre les gains de rendement obtenus d'une aube selon l'invention par rapport à une aube de l'art antérieur.

Sur cette figure sont représentées une courbe 100 montrant le rendement d'une soufflante de turbomachine équipée d'aubes selon l'invention et une courbe 102 montrant le rendement d'une soufflante équipée d'aubes selon l'art antérieur. Le rendement est exprimé en fonction du débit spécifique de la soufflante.

La Demanderesse a constaté que le rendement obtenu grâce aux aubes selon l'invention est nettement supérieur à celui obtenu par des aubes de l*'*art antérieur. Notamment, à haut débit spécifique, l*'*aube selon l*'*invention permet d'obtenir une forte hausse du rendement de la soufflante de la turbomachine. La comparaison entre les courbes 100 et 102 de la figure 4 vient parfaitement corroboré ce point.

## Revendications

1. Aube (4) de turbomachine comportant une pluralité de sections d'aube (22) empilées selon un axe radial (Z-Z), chaque section d'aube s'étendant selon un axe longitudinal (X-X) entre un bord d'attaque (24) et un bord de fuite (26) et selon un axe tangentiel (Y-Y) entre une face intrados et une face extrados, l'empilement des sections d'aube étant divisé selon l'axe radial en un empilement inférieur (28), un empilement intermédiaire (30) et un empilement supérieur (32), l'empilement inférieur (28) s'étendant depuis un pied (10) de l'aube jusqu'à une limite inférieure (34) de l'empilement intermédiaire, l'empilement intermédiaire (30) s'étendant depuis la limite inférieure (28) jusqu'à une limite supérieure (36), et l'empilement supérieur (32) s'étendant depuis la limite supérieure (36) de l'empilement intermédiaire jusqu'à une tête (12) de l'aube, **caractérisée en ce que :**
la projection d'une ligne (28a) reliant les bords d'attaque des sections d'aube de l'empilement inférieur (28) dans un plan méridien formé par l'axe longitudinal (X-X) et l'axe radial (Z-Z) présente une première inclinaison longitudinale (α) vers le bord d'attaque (24) qui est comprise entre 10° et 25° par rapport audit axe radial ;
la projection d'une ligne (30a) reliant les bords d'attaque des sections d'aube de l'empilement intermédiaire (30) dans le plan méridien présente une deuxième inclinaison longitudinale (β) vers le bord de fuite (26) qui est comprise entre 10° et 25° par rapport audit axe radial ;
la projection d'une ligne (32a) reliant les bords d'attaque des sections d'aube de l'empilement supérieur (32) dans le plan méridien présente une troisième inclinaison longitudinale (γ) vers le bord de fuite (26) qui est comprise entre 20° et 50° par rapport audit axe radial ; et
la limite inférieure (34) de l'empilement intermédiaire (30) des sections d'aube se situe entre 30% et 40% de la hauteur radiale totale (h) de l'empilement des sections d'aube mesurée depuis le pied de l'aube.

2. Aube selon la revendication 1, dans laquelle :
l'empilement inférieur (28) possède en outre une ligne (28b) reliant les centres de gravité de ses sections d'aube dont la projection dans un plan tangentiel formé par l'axe tangentiel (Y-Y) et l'axe radial (Z-Z) présente une première inclinaison tangentielle (δ) comprise entre -10° et 10° par rapport à l'axe radial ;
l'empilement intermédiaire (30) possède en outre une ligne (30b) reliant les centres de gravité de ses sections d'aube dont la projection dans le plan tangentiel présente une deuxième inclinaison tangentielle (ε) comprise entre -20° et 0° par rapport à l'axe radial ; et
l'empilement supérieur (32) possède en outre une ligne (32b) reliant les centres de gravité de ses sections d'aube dont la projection dans le plan tangentiel présente une troisième inclinaison tangentielle (ζ) comprise entre -40° et -20° par rapport à l'axe radial.

3. Aube selon l'une des revendications 1 et 2, dans laquelle la projection de la ligne (32b) reliant les bords d'attaque de l'empilement supérieur (32) présente en outre dans le plan méridien au niveau de sections de tête (38) une quatrième inclinaison longitudinale (θ) vers le bord d'attaque (24).

4. Aube selon l'une quelconque des revendications 1 à 3, dans laquelle les empilements intermédiaire (30) et supérieur (32) s'étendent sur des hauteurs radiales sensiblement identiques.

5. Soufflante (2) de turbomachine **caractérisée en ce qu'**elle comporte une pluralité d'aubes (4) selon l'une quelconque des revendications 1 à 4.

6. Turbomachine **caractérisée en ce qu'**elle comporte une pluralité d'aubes (4) selon l'une quelconque des revendications 1 à 4.

## Claims

1. A turbomachine blade (4) comprising a plurality of blade sections (22) stacked along a radial axis (Z-Z), each blade section extending along a longitudinal axis (X-X) between a leading edge (24) and a trailing edge (26) and along a tangential axis (Y-Y) between a pressure side face and a suction side face, the stack of blade sections being subdivided along the radial axis into a bottom stack (28), an intermediate stack (30), and a top stack (32), the bottom stack (28) extending from a root (10) of the blade to a bottom limit (34) of the intermediate stack, the intermediate stack (30) extending from the bottom limit (28) to a top limit (36), and the top stack (32) extending from the top limit (36) of the intermediate stack to a tip (12) of the blade, the blade being **characterized in that:**
the projection of a line (28a) interconnecting the leading edges of the blade sections of the bottom stack (28) onto a mid-plane formed by the longitudinal axis (X-X) and the radial axis (Z-Z) presents a first longitudinal angle of inclination (α) towards the leading edge (24) that lies in the range 10° to 25° relative to said radial axis;
the projection of a line (30a) interconnecting the leading edges of the blade sections of the intermediate stack (30) onto the mid-plane presents a second longitudinal angle of inclination (β) towards the trailing edge (26) lying in the range 10° to 25° relative to said radial axis;
the projection of a line (32a) interconnecting the leading edges of the blade sections of the top stack (32) onto the mid-plane presents a third longitudinal angle of inclination (γ) towards the trailing edge (26) that lies in the range 20° to 50° relative to said radial axis; and
the bottom limit (34) of the intermediate stack (30) of the blade sections lies in the range 30% to 40% of the total radial height (h) of the stack of blade sections measured from the root of the blade.

2. A blade according to claim 1, in which:
the bottom stack (28) also possesses a line (28b) interconnecting the centers of gravity of its blade sections which, in projection onto a tangential plane formed by the longitudinal axis (Y-Y) and the radial axis (Z-Z), presents a first tangential angle of inclination (δ) lying in the range -10° to 10° relative to the radial axis;
· the intermediate stack (30) also possesses a line (30b) interconnecting the centers of gravity of its blade sections having a projection onto the tangential plane that presents a second tangential angle of inclination (ε) lying in the range -20° to 0° relative to the radial axis; and
the top stack (32) also possesses a line (32b) interconnecting the centers of gravity of its blade sections having a projection onto the tangential plane that presents a third tangential angle of inclination (ξ) lying in the range -40° to -20° relative to the radial axis.

3. A blade according to claim 1 or claim 2, in which the projection of the line (32b) interconnecting the leading edges of the top stack (32) onto the mid-plane further presents, for the tip sections (38) a fourth longitudinal angle of inclination (θ) towards the leading edge (24).

4. A blade according to any one of claims 1 to 3, in which the intermediate and top stacks (30, 32) extend over substantially identical radial heights.

5. A turbomachine fan (2), **characterized in that** it comprises a plurality of blades (4) according to any one of claims 1 to 4.

6. A turbomachine**, characterized in that** it includes a plurality of blades (4) according to any one of claims 1 to 4.

## Patentansprüche

1. Schaufel (4) einer Turbomaschine, mit einer Vielzahl von entlang einer Radialachse (Z-Z) aufeinandergeschichteten Schaufelabschnitten (22), wobei jeder Schaufelabschnitt sich entlang einer Längsachse (X-X) zwischen einer Eintrittskante (24) und einer Austrittskante (26) sowie entlang einer tangentialen Achse (Y-Y) zwischen einer Vorderseite und einer Rückseite erstreckt, wobei die Aufschichtung der Schaufelabschnitte entlang der Radialachse in einen unteren Stapel (28), einen Zwischenstapel (30) und einen oberen Stapel (32) unterteilt ist, wobei der untere Stapel (28) sich von einem Fuß (10) der Schaufel bis zu einer unteren Grenze (34) des Zwischenstapels, der Zwischenstapel (30) sich von der unteren Grenze (34) bis zu einer oberen Grenze (36) und der obere Stapel (32) sich von der oberen Grenze (36) des Zwischenstapels bis zu einem Kopf (12) der Schaufel erstreckt, **dadurch gekennzeichnet, daß**
die Projektion einer die Eintrittskanten der Schaufelabschnitte des unteren Stapels (28) verbindenden Linie (28a) in einer durch die Längsachse (X-X) und die Radialachse (Z-Z) gebildeten Meridianebene eine erste Längsneigung (α) in Richtung der Eintrittskante (24) aufweist, die zwischen 10° und 25° gegenüber der Radialachse beträgt,
die Projektion einer die Eintrittskanten der Schaufelabschnitte des Zwischenstapels (30) verbindenden Linie (30a) in der Meridianebene eine zweite Längsneigung (β) in Richtung der Austrittskante (26) aufweist, die zwischen 10° und 25° gegenüber der Radialachse beträgt,
die Projektion einer die Eintrittskanten der Schaufelabschnitte des oberen Stapels (32) verbindenden Linie (32a) in der Meridianebene eine dritte Längsneigung (γ) in Richtung der Austrittskante (26) aufweist, die zwischen 20° und 50° gegenüber der Radialachse beträgt, und
die untere Grenze (34) des Zwischenstapels (30) der Schaufelabschnitte zwischen 30 % und 40 % der vom Fuß der Schaufel aus gemessenen radialen Gesamthöhe (h) der Aufschichtung der Schaufelabschnitte liegt.

2. Schaufel nach Anspruch 1, bei der
der untere Stapel (28) ferner eine die Schwerpunkte seiner Schaufelabschnitte verbindende Linie (28b) besitzt, deren Projektion in einer durch die tangentiale Achse (Y-Y) und die Radialachse (Z-Z) gebildeten Tangentialebene eine erste Tangentialneigung (δ) aufweist, die zwischen -10° und 10° gegenüber der Radialachse beträgt,
der Zwischenstapel (30) ferner eine die Schwerpunkte seiner Schaufelabschnitte verbindende Linie (30b) besitzt, deren Projektion in der Tangentialebene eine zweite Tangentialneigung (ε) aufweist, die zwischen -20° und 0° gegenüber der Radialachse beträgt, und
der obere Stapel (32) außerdem eine die Schwerpunkte seiner Schaufelabschnitte verbindende Linie (32b) besitzt, deren Projektion in der Tangentialebene eine dritte Tangentiaineigung (ξ) aufweist, die zwischen -40° und - 20° gegenüber der Radialachse beträgt.

3. Schaufel nach einem der Ansprüche 1 und 2, bei der die Projektion der die Eintrittskanten des oberen Stapels (32) verbindenden Linie (32a) ferner in der Meridianebene im Bereich von Kopfabschnitten (38) eine vierte Längsneigung (θ) in Richtung der Eintrittskante (24) aufweist.

4. Schaufeln nach einem der Ansprüche 1 bis 3, bei welcher der Zwischenstapel (30) und der obere Stapel (32) sich über im wesentlichen identische radiale Höhen erstrecken.

5. Gebläse (2) einer Turbomaschine, **dadurch gekennzeichnet, daß** es eine Vielzahl von Schaufeln (4) nach einem der Ansprüche 1 bis 4 umfaßt.

6. Turbomaschine, **dadurch gekennzeichnet, daß** sie eine Vielzahl von Schaufeln (4) nach einem der Ansprüche 1 bis 4 umfaßt.
